# EUROPÄISCHE PATENTSCHRIFT

(11) **EP 3 486 527 B1**
(45) Veröffentlichungstag und Bekanntmachung des Hinweises auf die Patenterteilung: **08.07.2020**
(21) Anmeldenummer: 17202338.4
(22) Anmeldetag: 17.11.2017
(51) Int. Cl.: F16H 55/08, F16H 1/30

(54) **SCHRAUBRAD-PLANETENRAD UND INNENSCHRAUBRAD FÜR EIN SCHRAUB-RAD-PLANETENGETRIEBE**
CROSSED-AXES PLANET GEAR AND INTERNAL CROSSED-AXES GEAR FOR A CROSSED-AXES PLANET GEAR
DISPOSITIF FORMANT ROUE HÉLICOÏDALE-PLANÉTAIRE ET ROUE HÉLICOÏDALE INTERNE POUR UN ENGRENAGE À ROUE HÉLICOÏDAL-PLANÉTAIRE

(43) Veröffentlichungstag der Anmeldung: 22.05.2019
(73) Patentinhaber: IMS Gear SE & Co. KGaA, 78166 Donaueschingen (DE)
(72) Erfinder: Koop, Matthias, 85375 Neufahrn bei Freising (DE); Albert, Simon, 79848 Bonndorf im Schwarzwald (DE); Kieninger, Matthias, 78050 Villingen-Schwenningen (DE)
(74) Vertreter: Westphal, Mussgnug & Partner Patentanwälte mbB

(56) Entgegenhaltungen:
- EP-A1- 2 166 252
- CH-A1- 707 435
- US-A- 1 276 855

## Beschreibung

Die vorliegende Erfindung betrifft ein Schraubrad-Planetenrad und ein Innenschraubrad für ein Schraubrad-Planetengetriebe für eine Verstelleinrichtung zum Verstellen zweier zueinander verstellbarer Bauteile. Ferner betrifft die Erfindung ein Schraubrad-Planetengetriebe mit mindestens einem derartigen Schraubrad-Planetenrad und einem Innenschraubrad für eine derartige Verstelleinrichtung.

Planetengetriebe finden in vielen Antriebssträngen Verwendung, da sie große Über- oder Untersetzungsverhältnisse auf kleinem Raum ermöglichen. Ein Anwendungsbereich stellen Hilfsantriebe für Kraftfahrzeuge dar, mit denen zwei zueinander verstellbare Fahrzeugteile relativ zueinander bewegt werden können. Ein Beispiel für derartige Hilfsantriebe sind elektromechanische Aktuatoranordnungen, die unter anderem zum Betätigen von Parkbremsen von Kraftfahrzeugen eingesetzt werden. Andere Hilfsantriebe werden beispielsweise für Sitzlängsverstellungen, Heccklappenverstellungen, Fensterheber und Schiebedachverstellungen eingesetzt. Da in Kraftfahrzeugen der zur Verfügung stehende Raum knapp bemessen ist, können Planetengetriebe ihre Vorteile hier besonders gut zur Geltung bringen.

Ein anderer Anwendungsbereich sind beispielsweise Antriebe für Fenster und Rollläden von Gebäuden, die im Zuge der zunehmenden Digitalisierung von Gebäuden, welche mit dem Begriff "Smart Home" bezeichnet wird, eine immer wichtigere Rolle spielen.

Bei Hilfsantrieben werden nahezu ausnahmslos Elektromotoren als Antriebsquelle eingesetzt. Die typischerweise verwendeten Elektromotoren drehen häufig mit einer vergleichsweise hohen Drehzahl, so dass hohe Untersetzungen erforderlich sind, um die Bauteile mit der gewünschten, vergleichsweise langsamen Bewegung relativ zueinander verstellen zu können. Zudem sind die vom Elektromotor abgegebenen Drehmomente häufig nicht ausreichend, um die Bauteile bewegen zu können, so dass auch aus diesem Grund Untersetzungen notwendig sind.

Auch wenn bekannte Planetengetriebe hohe Über- oder Untersetzungsverhältnisse bereitstellen können, reichen diese in einigen Anwendungsbereichen nicht aus, so dass man gezwungen ist, zwei- oder mehrstufige Getriebe zu verwenden, in welchen zwei oder mehrere Planetengetriebe im Antriebsstrang angeordnet sind. Hierdurch wird die Komplexität des Antriebsstrangs erhöht, wodurch im Vergleich zu einem einstufigen Schraubrad-Planetengetriebe die Fertigung verkompliziert, die Ausfallwahrscheinlichkeit erhöht und der Bauraum vergrößert werden.

Eine Möglichkeit, die Über- oder Untersetzungsverhältnisse von Planetengetrieben zu steigern, liegt in der Verwendung von sogenannten "Koaxial-Getrieben". Die Zahnräder von üblichen Planetengetrieben sind als Stirnräder ausgebildet. Bei Koaxial-Getrieben ist das Sonnenrad als eine Schnecke und die Planetenräder mit einer entsprechend angepassten Planetenradverzahnung ausgebildet. Das Hohlrad weist eine der Planetenradverzahnung entsprechende Innenverzahnung auf.

Ein besonders auffälliges Merkmal derartiger Koaxial-Getriebe ist die Tatsache, dass die Planetenradachsen nicht parallel zur Drehachse der Schnecke, sondern windschief hierzu verlaufen. Zumindest diesbezüglich ist der Begriff "Koaxial-Getriebe" nicht zutreffend, so dass derartige Getriebe im Folgenden als Schnecken-Planetengetriebe bezeichnet werden. Derartige Schnecken-Planetengetriebe sind beispielsweise in der WO 2015/036328 A1, der US 1 276 855 A, der WO 2014/108144 A1 und der EP 2 166 252 A1 offenbart. Neben der hohen Über- oder Untersetzungsverhältnisse stellen derartige Schnecken-Planetengetriebe ein ruhiges Laufverhalten bei einer geringen Geräuschentwicklung bereit.

Bei herkömmlichen Planetengetrieben sind die Planetenräder als Stirnräder ausgestaltet, welche bezogen auf eine durch die Planetenradachse verlaufende Schnittebene einen zylindrischen Querschnitt aufweisen. Aufgrund der Tatsache, dass das Sonnenrad als eine Schnecke ausgebildet ist und die Planetenradachsen windschief zur Drehachse der Schnecke verlaufen, muss der Querschnitt der Planetenräder angepasst werden, um einen über die gesamte Breite der Planetenradverzahnung gleichmäßigen Eingriff mit der Schnecke zu gewährleisten. Der Querschnitt weist zumindest innerhalb der Planetenradverzahnung eine mehr oder weniger stark ausgeprägte Wölbung oder Balligkeit auf, so dass sich je nach Auslegung nahezu kugelförmige Planetenräder ergeben können, wie es bei den in der EP 2 166 252 B1 offenbarten Planetenrädern der Fall ist.

Derart gewölbte oder ballige Planetenräder weisen aber bezogen auf die Planetenradachse eine Hinterschneidung auf, so dass für den Fall, dass sie im Gussverfahren hergestellt werden sollen, zwei Gussformen benötigt werden, welche in einer Ebene aneinanderstoßen, welche senkrecht zur Planetenradachse und durch den radial äußersten Umfang des Planetenrads verläuft. An dieser Ebene werden die beiden Gussformen für das Entformen wieder voneinander getrennt, so dass sich dort ein Trenngrat auf dem Planetenrad bildet. Wie oben erwähnt, zeichnen sich Schnecken-Planetengetriebe durch ein ruhiges Laufverhalten bei einer geringen Geräuschentwicklung aus. Aufgrund des Trenngrats erhöht sich aber die Geräuschentwicklung, so dass ein wesentlicher Vorteil der Schnecken-Planetengetriebe zumindest teilweise wieder zunichte gemacht wird. Da auch die Hohlräder zum Bereitstellen eines über die gesamte Breite der Planetenradverzahnung gleichmäßigen Eingriffs ebenfalls eine entsprechende Wölbung oder Balligkeit aufweisen, entsteht auch hier ein Trenngrat, wenn das Hohlrad im Gussverfahren hergestellt wird. Auch im Hohlrad führt der Trenngrat zu einer erhöhten Geräuschentwicklung.

Aufgabe einer Ausführungsform der vorliegenden Erfindung ist es, ein Schraubrad-Planetenrad für ein Schraubrad-Planetengetriebe anzugeben, welches im Gussverfahren herstellbar ist und zu einer geringen Geräuschentwicklung im Betrieb Schraubrad-Planetengetriebes führt. Des Weiteren liegt einer Ausgestaltung der vorliegenden Erfindung die Aufgabe zugrunde, ein Innenschraubrad für ein Schraubrad-Planetengetriebe zu schaffen, welches im Gussverfahren herstellbar ist und zu einer geringen Geräuschentwicklung im Betrieb Schraubrad-Planetengetriebes führt. Darüber hinaus liegt einer Ausbildung der Erfindung die Aufgabe zugrunde, ein Schraubrad-Planetengetriebe bereitzustellen, welches im Betrieb zu einer geringen Geräuschentwicklung führt und auf einfache Weise montiert werden kann.

Diese Aufgabe wird mit den in den Ansprüchen 1, 4 und 7 angegebenen Merkmalen gelöst. Vorteilhafte Ausführungsformen sind Gegenstand der Unteransprüche.

Eine Ausführungsform der Erfindung betrifft ein Schraubrad-Planetenrad für ein Schraubrad-Planetengetriebe für eine Verstelleinrichtung zum Verstellen zweier zueinander verstellbarer Bauteile, wobei das Schraubrad-Planetenrad eine Planetenradachse definiert und eine Planetenradverzahnung mit einem ersten Planetenradverzahnungsende und einem zweiten Planetenradverzahnungsende umfasst, wobei das erste Planetenradverzahnungsende und das zweite Planetenradverzahnungsende bezogen auf die Planetenradachse beabstandet voneinander angeordnet sind, wobei die Planetenradverzahnung einen Durchmesser aufweist, welcher vom ersten Planetenradverzahnungsende zum zweiten Planetenradverzahnungsende zunimmt oder abnimmt.

Die vorliegende Erfindung bezieht zwar primär auf Schraubrad-Planetengetriebe, ist aber ohne jede Einschränkung auf Schnecken-Planetengetriebe anwendbar, wie sie in der WO 2015/036328 A1 und der EP 2 166 252 A1 offenbart sind. Schraubrad-Planetengetriebe und Schnecken-Planetengetrieben weisen große Ähnlichkeiten auf, unterscheiden sich aber hauptsächlich in folgendem Punkt: Während bei Schraubrad-Planetengetrieben am Schraubrad ein punktförmiger Kontakt mit den Schraubrad-Planetengetrieben vorliegt, die bei Belastung zu einer sogenannten Druckellipse wird, liegt bei einem Schnecken-Planetengetriebe aufgrund der globoiden Form des Verzahnungsabschnitts der Schnecke und den Planetenrädern eine Linienberührung vor. Da aber die Planetenräder bei beiden Arten von Planetengetrieben eine Wölbung aufweisen, tritt auch bei beiden Arten das Problem des Trenngrats auf, wenn die Planetenräder im Gussverfahren hergestellt werden.

Vorschlagsgemäß weist die Planetenradverzahnung einen Durchmesser auf, welcher vom ersten Planetenradverzahnungsende zum zweiten Planetenradverzahnungsende zunimmt oder abnimmt. Dieses Merkmal ist so zu verstehen, dass ausgehend von einem Planetenradverzahnungsende zum anderen Planetenradverzahnungsende der Durchmesser entweder nur zunimmt oder nur abnimmt, in keinem Fall aber sowohl zu- als auch abnimmt. In jedem Fall weist die Planetenradverzahnung an einem Planetenradverzahnungsende einen anderen Durchmesser auf als am anderen Planetenradverzahnungsende. Dabei ist auch der Fall eingeschlossen, dass der Durchmesser der Planetenradverzahnung auch abschnittsweise unverändert bleibt. Hierdurch wird erreicht, dass bezogen auf die Planetenradachse keine Hinterschneidung erzeugt wird und somit die gesamte Planetenradverzahnung in einer Gussform gefertigt werden kann. Der Trenngrat kann außerhalb der Planetenradverzahnung angeordnet werden. Zum Entformen kann das Planetenrad mit einer parallel zur Planetenradachse gerichteten Bewegung aus der Gussform entnommen werden. Je nach Ausgestaltung der Planetenradverzahnung muss das Planetenrad beim Entformen relativ zur Gussform um die Planetenradachse gedreht werden. Hierdurch kann die Planetenradverzahnung ohne Trenngrat hergestellt werden, so dass die von einem Trenngrat hervorgerufene Geräuschentwicklung entfällt.

Das Schraubrad-Planetenrad kann mit einer entsprechenden Anpassung der Planetenradzahnung für ein Schnecken-Planetengetriebe verwendet werden, bei dem sich dieselben Vorteile ergeben.

Die mit der Verstelleinrichtung zueinander verstellbaren Bauteile können Fahrzeugteile wie Fahrzeugsitze, Heckklappen, Fahrzeugfenster oder Schiebedächer sein. Die Bauteile können aber auch Fenster, Jalousien oder Rollläden von Gebäuden oder Schiffen sein. Die akustischen Eigenschaften der mit dem vorschlagsgemäßen Planetenträger ausgerüsteten Verstelleinrichtung unterscheiden sich deutlich von bekannten Verstelleinrichtungen, so dass eine geringere Geräuschentwicklung erreicht werden kann.

Nach Maßgabe einer weiteren Ausführungsform besteht das Planetenrad aus Kunststoff und ist urgeformt, insbesondere spritzgegossen. Als Kunststoffe bieten sich insbesondere technische Thermoplaste wie Polyamid (PA), Polybutylenterephthalat (PBT) oder Polyoxymethylen (POM) oder Hochleistungsthermopaste wie Polyetheretherketon (PEEK) an. Diese thermoplastischen Kunststoffe erfüllen die Anforderungen im Betrieb der Schraubrad-Planetengetriebe in besonderem Maße und lassen sich spritzgießen. Das Spritzgussverfahren hat insbesondere den Vorteil, dass sich die Planetenräder in großer Stückzahl in kurzer Zeit kostengünstig herstellen lassen.

Eine weitere Ausführungsform zeichnet sich dadurch aus, dass das Schraubrad-Planetenrad aus Metall besteht. Die Verwendung von Metall für das Schraubrad-Planetenrad bietet sich insbesondere dann an, wenn das Schraubrad-Planetenrad hoch belastet ist und daher nicht aus Kunststoff gefertigt werden kann. In diesem Fall kann das Schraubrad-Planetenrad aus Stahl oder Aluminium bestehen. Das Schraubrad-Planetenrad kann unter Verwendung eines Urformverfahrens wie Sintern oder Druckgießen hergestellt werden.

Eine Ausgestaltung der Erfindung betrifft eine Innenschraubrad für ein Schraubrad-Planetengetriebe für eine Verstelleinrichtung zum Verstellen zweier zueinander verstellbarer Bauteile , wobei das Innenschraubrad eine Innenschraubradachse definiert und eine Innenverzahnung mit einem ersten Innenverzahnungsende und einem zweiten Innenverzahnungsende umfasst, wobei das erste Innenverzahnungsende und das zweite Innenverzahnungsende bezogen auf die Innenschraubradachse beabstandet voneinander angeordnet sind, wobei die Innenverzahnung einen Durchmesser aufweist, welcher vom ersten Innenverzahnungsende zum zweiten Innenverzahnungsende zunimmt oder abnimmt.
Die für die Planetenräder diskutierten technischen Effekte und Vorteile gelten für das Innenschraubrad gleichermaßen. Der Verlauf des Durchmessers der Innenverzahnung stellt einen gleichmäßigen Eingriff über die gesamte Breite mit der Planetenverzahnung bereit.

Insbesondere lässt sich die Innenverzahnung im Gussverfahren ohne Trenngrat herstellen, so dass die Geräuschentwicklung im Betrieb des Schraubrad-Planetengetriebes gering gehalten wird. Das Innenschraubrad kann mit einer entsprechenden Anpassung der Innenverzahnung als ein Hohlrad für ein Schnecken-Planetengetriebe verwendet werden, bei dem sich dieselben Vorteile ergeben.

In einer weitergebildeten Ausgestaltung kann das Innenschraubrad aus Kunststoff bestehen und urgeformt, insbesondere spritzgegossen, sein. Als Kunststoffe bieten sich auch für das Innenschraubrad insbesondere technische Thermoplaste wie Polyamid (PA), Polybutylenterephthalat (PBT) oder Polyoxymethylen (POM) oder Hochleistungsthermopaste wie Polyetheretherketon (PEEK) an. Diese thermoplastischen Kunststoffe erfüllen die Anforderungen im Betrieb der Schraubrad-Planetengetriebe in besonderem Maße und lassen sich spritzgießen. Das Spritzgussverfahren hat insbesondere den Vorteil, dass sich die Hohlräder in großer Stückzahl in kurzer Zeit kostengünstig herstellen lassen. Andere urformende Verfahren wie Druckgießen oder der 3D-Druck sind ebenfalls anwendbar.

Eine weitere Ausgestaltung sieht vor, dass das Innenschraubrad aus Metall besteht. Die Verwendung von Metall für das Innenschraubrad bietet sich insbesondere dann an, wenn das Innenschraubrad hoch belastet ist und daher nicht aus Kunststoff gefertigt werden kann. In diesem Fall kann das Innenschraubrad aus Stahl oder Aluminium bestehen. Das Innenschraubrad kann unter Verwendung eines Urformverfahrens wie Sintern oder Druckgießen hergestellt werden.

Eine Ausbildung der Erfindung betrifft ein Schraubrad-Planetengetriebe für eine Verstelleinrichtung zum Verstellen zweier zueinander verstellbarer Bauteile, umfassend eine Schraubradwelle mit einer Schraubradverzahnung, welches um eine Schraubradwellenachse drehbar gelagert ist, einen Planetenträger mit zumindest einem Planetenrad nach einem der zuvor erörterten Ausführungsformen, das um die Planetenradachse drehbar im Planetenträger gelagert ist, wobei die Planetenradachse windschief zur Schraubradwellenachse verläuft und die Planetenradverzahnung mit der Schraubradverzahnung in Eingriff steht, und ein Innenschraubrad nach einem der zuvor erläuterten Ausgestaltungen, mit einer Innenverzahnung, welche mit der Planetenradverzahnung in Eingriff steht.

Die technischen Effekte und Vorteile, die sich mit dem vorschlagsgemäßen Schraubrad-Planetengetriebe erreichen lassen, entsprechen denjenigen, die für das vorliegende Planetenrad sowie das vorschlagsgemäße Innenschraubrad erörtert worden sind. Zusammenfassend sei darauf hingewiesen, dass die Planetenräder über die gesamte Breite der Planetenradverzahnung einen gleichmäßigen mit der Schraubradverzahnung und der Innenverzahnung in Eingriff stehen, so dass das vorschlagsgemäße Schraubrad-Planetengetriebe ein ruhiges Laufverhalten bei einer geringen Geräuschentwicklung bereitstellt und trotzdem in hohen Stückzahlen zu günstigen Kosten zu fertigen ist.

Die beschriebenen technischen Effekte und Vorteile, die sich mit dem vorschlagsgemäßen Schraubrad-Planetengetriebe erreichen lassen, lassen sich bei einer entsprechenden Anpassung der Verzahnungen des Schraubrads, der Planetenräder und des Innenschraubrads auch für Schnecken-Planetengetriebe realisieren.

Zudem betrifft die Erfindung die Verwendung eines vorschlagsgemäßen Planetenträgers in Verstelleinrichtungen in Fahrzeugen zum Verstellen zweier zueinander verstellbarer Fahrzeugteile.

Beispielhafte Ausführungsformen der Erfindung werden im Folgenden unter Bezugnahme auf die beigefügten Zeichnungen näher erläutert. Es zeigen
- Figur 1: eine prinzipielle Schnittdarstellung eines vorschlagsgemäßen Planetenrads und eines vorschlagsgemäßen Innenschraubrads,
- Figur 2a): ein vorschlagsgemäßes Schraubrad-Planetengetriebe anhand einer ersten Teilschnittdarstellung,
- Figur 2b): eine vergrößerte Darstellung des in Figur 2a) gekennzeichneten Bereichs A,
- Figur 2c): ein vorschlagsgemäßes Schraubrad-Planetengetriebe anhand einer zweiten Teilschnittdarstellung,
- Figur 2d): eine vergrößerte Darstellung des in Figur 2c) gekennzeichneten Bereichs B,
- Figur 2e): eine perspektivische Darstellung des in den Figuren 2a) bis 2d) dargestellten Schraubrad-Planetengetriebes im nicht fertig montierten Zustand, und
- Figuren: 3a) bis 3e) dieselben Darstellungen wie in Figur 2a) bis 2e), wobei die Verzahnungsabschnitte aus Darstellungsgründen weggelassen worden sind.

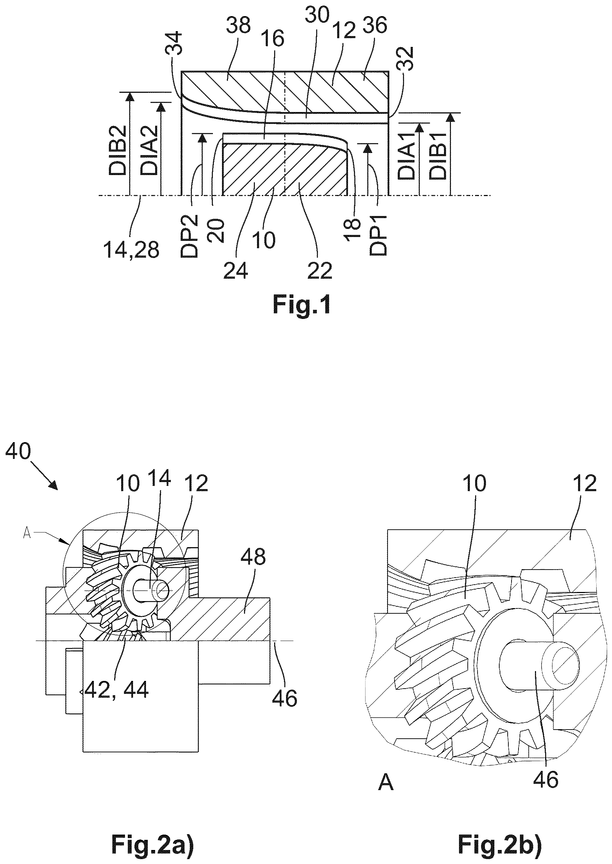

Figur 1 zeigt eine prinzipielle Darstellung eines erfindungsgemäßen Schraubrad-Planetenrads 10 und eines erfindungsgemäßen Innenschraubrad 12. Figur 1 dient ausschließlich der Erläuterung des erfinderischen Prinzips und ist daher stark vereinfacht. Insbesondere lässt Figur 1 keinen Rückschluss auf die Ausrichtung der des Schraubrad-Planetenrads 10 in Bezug auf das Innenschraubrad 12 zu.

Das Schraubrad-Planetenrad 10 weist eine Planetenradachse 14 und eine Planetenradverzahnung 16 auf. Weiterhin weist das Schraubrad-Planetenrad 10 ein erstes Planetenradverzahnungsende 18 und ein zweites Planetenradverzahnungsende 20 auf, die bezogen auf die Planetenradachse 14 beabstandet voneinander angeordnet sind. Die Planetenradverzahnung 16 weist einen Durchmesser DP auf, welcher beispielsweise der Fußkreisdurchmesser, der Teilkreisdurchmesser oder der Kopfkreisdurchmesser sein kann. In Figur 1 ist annäherungsweise der Kopfkreisdurchmesser gekennzeichnet. Unabhängig davon, welcher Durchmesser DP für die Planetenradverzahnung 16 verwendet wird, steigt im in Figur 1 dargestellten Ausführungsbeispiel der Durchmesser DP der Planetenradverzahnung 16 vom ersten Planetenradverzahnungsende 18 zum zweiten Planetenradverzahnungsende 20 an. Folglich ist der Durchmesser DP1 der Planetenradverzahnung 16 am ersten Planetenradverzahnungsende 18 kleiner als der Durchmesser DP2 der Planetenradverzahnung 16 am zweiten Planetenradverzahnungsende 20. Dies schließt nicht aus, dass das Planetenrad auch Abschnitte aufweist, in denen der Durchmesser DP nicht ansteigt, sondern konstant bleibt.

Im in Figur 1 dargestellten Beispiel weist das Schraubrad-Planetenrad 10 einen ersten Abschnitt 22 und einen zweiten Abschnitt 24 auf. Der erste Abschnitt 22 geht vom ersten Planetenradverzahnungsende 18 aus und erstreckt sich bezogen auf die Planetenradachse 14 in etwa bis zur Hälfte des Schraubrad-Planetenrads 10. Der zweite Abschnitt 24 schließt sich dem ersten Abschnitt 22 an und erstreckt sich bis zum zweiten Planetenradverzahnungsende 20. Die Erstreckung des ersten und des zweiten Abschnitts 22, 24 ist hier rein aus Darstellungsgründen gewählt. Es ist genauso gut möglich, dass sich der erste Abschnitt 22 bezogen auf die Innenschraubradachse 28 deutlich weiter erstreckt als der zweite Abschnitt 24 oder umgekehrt.

Der Durchmesser DP der Planetenradverzahnung 16 steigt im ersten Abschnitt 22 an, während der Durchmesser DP im zweiten Abschnitt 24 konstant bleibt. Der Durchmesser DP im ersten Abschnitt 22 steigt dabei so an, dass die Planetenradverzahnung 16 eine Wölbung oder eine Balligkeit aufweist.

Das Merkmal, wonach der Durchmesser DP der Planetenradverzahnung 16 vom ersten Planetenradverzahnungsende 18 zum zweiten Planetenradverzahnungsende 20 zunimmt, ist so zu verstehen, dass der Durchmesser DP zwar, wie in Figur 1 dargestellt, abschnittsweise konstant bleiben kann, aber auf keinen Fall, auch nicht abschnittsweise, vom ersten Planetenradverzahnungsende 18 zum zweiten Planetenradverzahnungsende 20 abnimmt.

Wenn bezogen auf Figur 1 die Änderung des Durchmessers der Planetenradverzahnung 16 ausgehend vom zweiten Planetenradverzahnungsende 20 zum ersten Planetenradverzahnungsende 18 betrachtet wird, ergibt sich der umgekehrte Fall. In diesem Fall nimmt der Durchmesser DP vom zweiten Planetenradverzahnungsende 20 zum ersten Planetenradverzahnungsende 18 ab, wobei der Durchmesser DP auch abschnittsweise konstant bleiben kann. In keinem Fall nimmt er ausgehend vom zweiten Planetenradverzahnungsende 20 zum ersten Planetenradverzahnungsende 18 betrachtet zu.

Der zweite Abschnitt 24, in welchem die Planetenradverzahnung 16 einen konstanten Durchmesser aufweist und folglich nicht gewölbt ist, kann auch entfallen.

Das in Figur 1 gezeigte Innenschraubrad 12 weist eine Innenschraubradachse 28 und eine Innenverzahnung 30 auf. Weiterhin weist das Innenschraubrad 12 ein erstes Innenverzahnungsende 32 und ein zweites Innenverzahnungsende 34 auf. Die Innenverzahnung 30 weist einen Durchmesser DI auf, welcher, wie bereits zum Schraubrad-Planetenrad 10 ausgeführt, beispielsweise der Kopfkreisdurchmesser, der Kopfkreisdurchmesser oder der Teilkreisdurchmesser sein kann. In Figur 1 sind sowohl der Kopfkreisdurchmesser DIA als auch der Fußkreisdurchmesser DIB gekennzeichnet.

Unabhängig davon, welcher Durchmesser DI für die Innenverzahnung 30 verwendet wird, steigt der Durchmesser DI vom ersten Innenverzahnungsende 32 zum zweiten Innenverzahnungsende 32 an. Folglich sind der Kopfkreisdurchmesser DIA1 und der Teilkreisdurchmesser DIB1 am ersten Innenverzahnungsende 32 kleiner als der Kopfkreisdurchmesser DIA2 und der Teilkreisdurchmesser DIB2 am zweiten Innenverzahnungsende 34. Wie auch das Schraubrad-Planetenrad 10 lässt sich das Innenschraubrad 12 in einen ersten Abschnitt 36 und einen zweiten Abschnitt 38 unterteilen. Der erste Abschnitt 36 geht vom ersten Innenverzahnungsende 32 aus und erstreckt sich bezogen auf die Innenschraubradachse 28 in etwa bis zur Mitte des Innenschraubrads 12. Der zweite Abschnitt 38 schließt sich dem ersten Abschnitt 36 an und erstreckt sich bis zum zweiten Innenverzahnungsende 34. Die Erstreckungen des ersten und des zweiten Abschnitts 36, 38 sind hier rein aus Darstellungsgründen gewählt. Es ist genauso gut möglich, dass sich der erste Abschnitt 36 bezogen auf die Innenschraubradachse 28 deutlich weiter erstreckt als der zweite Abschnitt 38 oder umgekehrt.

Der Durchmesser DI der Innenverzahnung 30 bleibt im ersten Abschnitt 36 konstant, während der Durchmesser DI der Innenverzahnung 30 im zweiten Abschnitt 38 zunimmt. Dabei nimmt der Durchmesser DI derart zu, dass die Innenverzahnung 30 im zweiten Abschnitt 38 eine Wölbung oder eine Balligkeit aufweist. Wie bereits zum Schraubrad-Planetenrad 10 ausgeführt, enthält die Innenverzahnung 30 keine Abschnitte, in welchen ausgehend vom ersten Innenverzahnungsende 32 zum zweiten Innenverzahnungsende 32 der Durchmesser DP abnimmt.

Wenn bezogen auf Figur 1 die Änderung des Durchmessers DI der Innenverzahnung 30 ausgehend vom zweiten Innenverzahnungsende 34 zum ersten Innenverzahnungsende 32 betrachtet wird, ergibt sich der umgekehrte Fall. In diesem Fall nimmt der Durchmesser DI vom zweiten Innenverzahnungsende 34 zum ersten Innenverzahnungsende 32 ab, wobei der Durchmesser DI auch abschnittsweise konstant bleiben kann. In keinem Fall nimmt er ausgehend vom zweiten Innenverzahnungsende 34 zum ersten Innenverzahnungsende 32 betrachtet zu.

Der erste Abschnitt 32, in welchem der Durchmesser DI der Innenverzahnung 30 konstant bleibt, kann auch entfallen.

In den Figuren 2a) bis 2e) sind verschiedene Ansichten eines erfindungsgemäßen Schraubrad-Planetengetriebes 40 dargestellt, welches insgesamt drei Schraubrad-Planetenräder 10 aufweist, die in Figur 1 prinzipiell beschrieben worden sind. Zudem umfasst das Schraubrad-Planetengetriebe 40 ein Innenschraubrad 12, welches denjenigen prinzipiellen Aufbau aufweist, der in Figur 1 beschrieben worden ist.

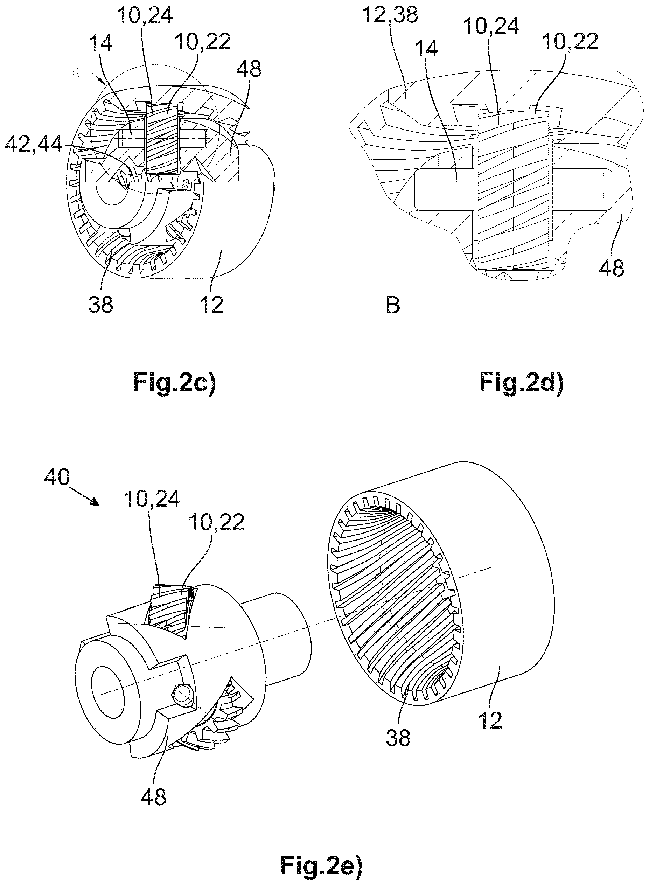

In Figur 2c) ist erkennbar, dass das Schraubrad-Planetengetriebe 40 eine Schraubradwelle 42 mit einer Schraubradverzahnung 44 aufweist. Die Schraubradwelle 42 ist um eine Schraubradwellenachse 46 auf nicht näher gezeigte Weise drehbar gelagert.

Insbesondere aus den Figuren 2e) und 3e) lässt sich erkennen, dass die Schraubrad-Planetenräder 10 in einem Planetenträger 48 drehbar um ihre Planetenradachsen 14 gelagert sind, wobei die Planetenradachsen 14 windschief zur Schraubradwellenachse 46 verlaufen.

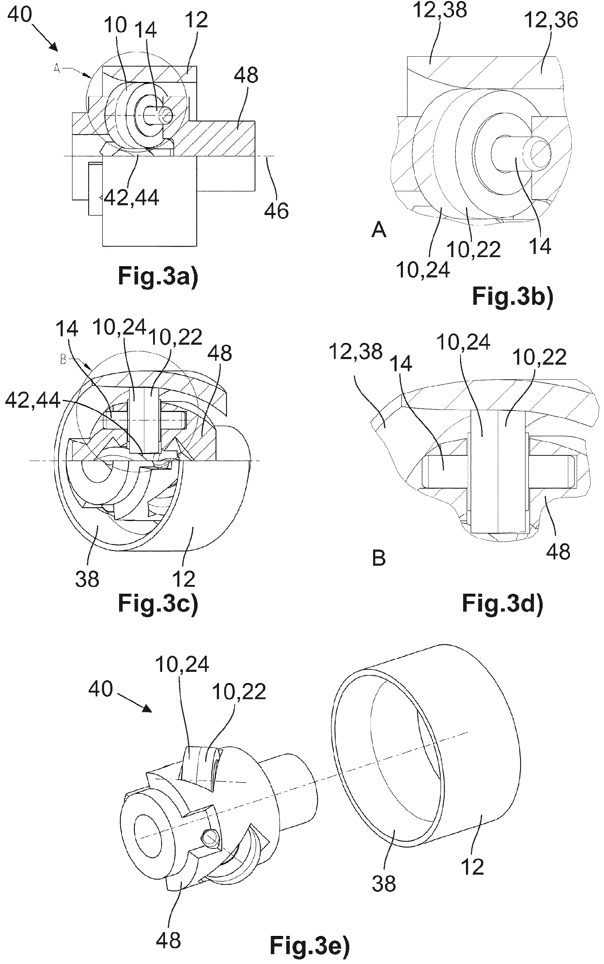

Aufgrund der Tatsache, dass die Planetenradachsen 14 windschief zur Schraubradwellenachse 46 verlaufen, ist es nahezu unmöglich, eine Schnittdarstellung zu zeigen, in welcher die Wölbungen oder die Balligkeiten sowohl der Schraubrad-Planetenräder 10 als auch des Innenschraubrad 12 zu sehen sind. In den Figuren 3a) bis 3e) ist das Schraubrad-Planetengetriebe 40 anhand derselben Ansichten wie in Figuren 2 a) bis 2e) gezeigt, wobei jedoch die Verzahnungen der Schraubradwelle 42, der Schraubrad-Planetenräder 10 und des Innenschraubrad 12 aus Darstellungsgründen weggelassen worden sind. In Figur 1 ist aus Darstellungsgründen das Schraubrad-Planetenrad 10 relativ zum Innenschraubrad 12 gedreht worden, dass die Innenschraubradachse 28 und die Planetenradachse 14 parallel zueinander verlaufen.

Wie am besten aus den Figuren 1 und 3b) erkennbar, sind die Schraubrad-Planetenräder 10 im montierten Zustand des Schraubrad-Planetengetriebes 40 so in Bezug auf das Innenschraubrad 12 ausgerichtet, dass der erste Abschnitt 22 und der zweite Abschnitt 38, in denen der Durchmesser DP der Planetenradverzahnung 16 bzw. der Durchmesser DI der Innenverzahnung 30 zunehmen, bezogen auf die Schraubradwellenachse 46 in entgegengesetzte Richtungen zeigen. Mit anderen Worten ändern im montierten Zustand der Durchmesser DP der Planetenradverzahnung 16 und der Durchmesser DI der Innenverzahnung 30 je nachdem, in welche Richtung man entlang der Schraubradwellenachse fährt, derart, dass sie entweder nur zu- oder nur abnehmen.

Hierdurch wird gewährleistet, dass der Eingriff der Schraubrad-Planetenräder 10 in das Innenschraubrad 12 und in die Schraubradwelle 42 vom ersten Planetenradverzahnungsende 18 bis zum zweiten Planetenradverzahnungsende 20 weitgehend gleichmäßig erfolgt. Da der erste Abschnitt 22 des Schraubrad-Planetenrads 10 und der zweite Abschnitt 38 des Innenschraubrads 12, in denen der Durchmesser DP der Planetenradverzahnung 16 bzw. der Durchmesser DI der Innenverzahnung 30 zunimmt, zentrierend wirken, wenn die Schraubrad-Planetenräder 10 in das Innenschraubrad 12 eingebracht wird, wird die Montage des Schraubrad-Planetengetriebes 40 erleichtert.

Insbesondere bezugnehmend auf die Figuren 2e) und 3e) sei angemerkt, dass der zweite Abschnitt 38 auch am anderen Ende des Innenschraubrads 12 angeordnet sein kann. In diesem Fall sind die ersten Abschnitte 22 und die zweiten Abschnitte 24 der Schraubrad-Planetenräder umgekehrt angeordnet und die Montage erfolgt von der entgegengesetzten Richtung.

### Bezugszeichenliste

- 10: Schraubrad-Planetenrad
- 12: Innenschraubrad
- 14: Planetenradachse
- 16: Planetenradverzahnung
- 18: erstes Planetenradverzahnungsende
- 20: zweites Planetenradverzahnungsende
- 22: erster Abschnitt
- 24: zweiter Abschnitt
- 28: Innenschraubradachse
- 30: Innenverzahnung
- 32: erstes Innenverzahnungsende
- 34: zweites Innenverzahnungsende
- 36: erster Abschnitt
- 38: zweiter Abschnitt
- 40: Schraubrad-Planetengetriebe
- 42: Schraubradwelle
- 44: Schraubradverzahnung
- 46: Schraubradwellenachse
- 48: Planetenträger

- DP1, DP2: Durchmesser Planetenrad
- DI1, DI2: Durchmesser Innenschraubrad

## Patentansprüche

1. Schraubrad-Planetenrad (10) für ein Schraubrad-Planetengetriebe (40) für eine Verstelleinrichtung zum Verstellen zweier zueinander verstellbarer Bauteile, wobei das Schraubrad-Planetenrad (10)
- eine Planetenradachse (14) definiert und
- eine Planetenradverzahnung (16) mit einem ersten Planetenradverzahnungsende (18) und einem zweiten Planetenradverzahnungsende (20) umfasst, wobei das erste Planetenradverzahnungsende (18) und das zweite Planetenradverzahnungsende (20) bezogen auf die Planetenradachse (14) beabstandet voneinander angeordnet sind,
**dadurch gekennzeichnet, dass** die Planetenradverzahnung (16) einen Durchmesser (DP1, DP2) aufweist, welcher vom ersten Planetenradverzahnungsende (18) zum zweiten Planetenradverzahnungsende (20) zunimmt oder abnimmt.

2. Schraubrad-Planetenrad (10) nach Anspruch 1,
**dadurch gekennzeichnet, dass** das Schraubrad-Planetenrad (10) aus Kunststoff besteht und urgeformt, insbesondere spritzgegossen ist.

3. Schraubrad-Planetenrad (10) nach Anspruch 1,
**dadurch gekennzeichnet, dass** das Schraubrad-Planetenrad (10) aus Metall besteht.

4. Innenschraubrad (12) für ein Schraubrad-Planetengetriebe (40) für eine Verstelleinrichtung zum Verstellen zweier zueinander verstellbarer Bauteile, wobei das Innenschraubrad (12)
- eine Innenschraubradachse (28) definiert und
- eine Innenverzahnung (30) mit einem ersten Innenverzahnungsende (32) und einem zweiten Innenverzahnungsende (34) umfasst, wobei das erste Innenverzahnungsende (32) und das zweite Innenverzahnungsende (34) bezogen auf die Innenschraubradachse (28) beabstandet voneinander angeordnet sind, **dadurch gekennzeichnet, dass**
- die Innenverzahnung (30) einen Durchmesser (DI1, DI2) aufweist, welcher vom ersten Innenverzahnungsende (32) zum zweiten Innenverzahnungsende (34) zunimmt oder abnimmt.

5. Innenschraubrad (12) nach Anspruch 4,
**dadurch gekennzeichnet, dass** das Innenschraubrad (12) aus Kunststoff besteht und urgeformt, insbesondere spritzgegossen ist.

6. Innenschraubrad (12) nach Anspruch 4,
**dadurch gekennzeichnet, dass** das Innenschraubrad (12) aus Metall besteht.

7. Schraubrad-Planetengetriebe (40) für eine Verstelleinrichtung zum Verstellen zweier zueinander verstellbarer Bauteile, umfassend
- eine Schraubradwelle (42) mit einer Schraubradverzahnung (44), welches um eine Schraubradwellenachse (46) drehbar gelagert ist,
- einen Planetenträger mit zumindest einem Schraubrad-Planetenrad (10) nach einem der Ansprüche 1 oder 2, das um die Planetenradachse (14) drehbar im Planetenträger gelagert ist, wobei die Planetenradachse (14) windschief zur Schraubradwellenachse (46) verläuft und die Planetenradverzahnung (16) mit der Schraubradverzahnung (44) in Eingriff steht, und
- ein Innenschraubrad (12) nach Anspruch 4, mit einer Innenverzahnung (30), welche mit der Planetenradverzahnung (16) in Eingriff steht.

## Claims

1. Bevel planetary gear (10) for a bevel planetary gearing (40) for an adjustment device for adjusting two, adjustable to each other, components, wherein the bevel planetary gear (10)
- defines a planetary gear axis (14) and
- comprises a planetary gear toothing (16) with a first planetary gear toothing end (18) and a second planetary gear toothing end (20), wherein the first planetary gear toothing (18) and the second planetary gear toothing (20) are arranged, in relation to the planetary gear axis, at a distance to each other,
**characterized in that** the planetary gear toothing (16) has a diameter (DP1, DP2) that increases or decreases from the first planetary gear toothing end (18) to the second planetary gear toothing end (20).

2. Bevel planetary gear (10) in accordance with claim 1,
**characterized in that** the bevel planetary gear (10) is comprised of plastic and is originally formed, in particular, injection molded.

3. Bevel planetary gear (10) in accordance with claim 1,
**characterized in that** the bevel planetary gear (10) is comprised of metal.

4. Internal bevel gear (12) for bevel planetary gear (40) for an adjustment device for adjusting two, adjustable to each other, components, wherein the internal bevel gear (12)
- defines an inner bevel gear axis (28) and
- comprises an inner toothing (30) with a first inner toothing end (32) and a second inner toothing end (34), wherein the first inner toothing end (32) and the second inner toothing end (34) are arranged, in relation to the inner bevel gear axis (28), at a distance to each other,
**characterized in that**
- the inner toothing (30) has a diameter (DI1, DI2) that increases or decreases from the first inner gear toothing end (18) to the second inner gear toothing end (20).

5. Inner bevel gear (12) in accordance with claim 4,
**characterized in that** the inner bevel gear (12) is comprised of plastic and is originally formed, in particular, injection molded.

6. Inner bevel gear (12) in accordance with claim 4,
**characterized in that** the inner bevel gear (12) is comprised of metal.

7. Bevel planetary gearing (40) for an adjustment device for adjusting two, adjustable to each other, components, comprising
- a bevel gear shaft (42) with a bevel gear toothing (44) that is rotatably mounted around a bevel gear shaft axis (46),
- a planetary carrier with at least one bevel planetary gear (10) in accordance with claim 1 or 2, the bevel planetary gear (10) being rotatably mounted in the planetary carrier around the planetary gear axis (14), wherein the planetary gear axis (14) extends askew to the bevel gear shaft axis (46) and the planetary gear toothing (16) engages with the bevel gear toothing (44), and
- an inner bevel gear (12) in accordance with claim 4 engages with the planetary gear toothing (16).

## Revendications

1. Roue satellite hélicoïdale (10) pour une transmission hélicoïdale à satellites (40) d'une installation d'entraînement de deux composants mobiles l'un par rapport à l'autre,
la roue satellite hélicoïdale (10) :
- définit un axe de satellite (14)
- a une denture de satellite (16) avec une première extrémité de denture (18) et une seconde extrémité de denture (20) de satellite, la première extrémité de denture (18) et la seconde extrémité de denture (20) étant écartées l'une de l'autre selon l'axe de satellite (14),
roue satellite hélicoïdale **caractérisée en ce que**
la denture de satellite (16) a un diamètre (DP1, DP 2) qui augmente ou diminue à partir de la première extrémité de denture de satellite (18) vers la seconde extrémité de denture de satellite (20).

2. Roue satellite hélicoïdale (10) selon la revendication 1,
**caractérisée en ce que**
la roue satellite hélicoïdale (10) est en matière plastique et à l'origine elle est injectée.

3. Roue satellite hélicoïdale (10) selon la revendication 1,
**caractérisée en ce que**
la roue satellite hélicoïdale (10) est en métal.

4. Roue hélicoïdale interne (12) pour un engrenage hélicoïdal à satellites (40) d'une installation d'entraînement de deux composants mobiles l'un par rapport à l'autre,
la roue hélicoïdale interne (12) :
- définit un axe de roue hélicoïdale interne (28) et
- a une denture interne (30) ayant une première extrémité de denture interne (32) et une seconde extrémité de denture interne (34), la première extrémité de denture interne (32) et la seconde extrémité de denture interne (34) étant écartées l'une de l'autre selon l'axe de la roue hélicoïdale interne (28),
**caractérisée en ce que**
la denture interne (30) à un diamètre (DI1, DI2) qui augmente ou diminue à partir de la première extrémité de denture interne (32) vers la seconde extrémité de denture interne (34).

5. Roue hélicoïdale interne (12) selon la revendication 4,
**caractérisée en ce que**
la roue hélicoïdale interne (12) est en matière plastique et à l'origine elle est notamment injectée.

6. Roue hélicoïdale interne (12) selon la revendication 4,
**caractérisée en ce que**
la roue hélicoïdale interne (12) est en métal.

7. Engrenage hélicoïdal à satellites (40) pour une installation d'entraînement de deux composants mobiles l'un par rapport à l'autre comprenant
- un axe de roue hélicoïdale (42) avec une denture de roue hélicoïdale (44), montée à rotation autour d'un axe d'arbre de roue hélicoïdale (46)
- un porte-satellites ayant au moins une roue satellite hélicoïdale (10) selon l'une des revendications 1 ou 2 montée à rotation dans le porte-satellites autour de l'axe de satellite (14), l'axe de satellite (14) étant incliné par rapport à l'axe de l'arbre de satellite (46) et la denture de satellite (16) est en prise avec la denture de la roue hélicoïdale (44) et
- une roue hélicoïdale interne (12) selon la revendication 4 comportant une denture interne (30) en prise avec la denture de satellite (16).
